(19) Europäisches Patentamt / European Patent Office / Office européen des brevets

(11) **EP 3 230 415 B1**

(12) **FASCICULE DE BREVET EUROPEEN**

(45) Date de publication et mention de la délivrance du brevet:
**17.02.2021 Bulletin 2021/07**

(21) Numéro de dépôt: **15802139.4**

(22) Date de dépôt: **01.12.2015**

(51) Int Cl.:
*C10J 3/72* (2006.01)          *B01J 8/26* (2006.01)
*C01B 3/34* (2006.01)          *F23C 99/00* (2006.01)
*F23C 10/01* (2006.01)         *C01B 3/44* (2006.01)

(86) Numéro de dépôt international:
**PCT/EP2015/078244**

(87) Numéro de publication internationale:
**WO 2016/091666 (16.06.2016 Gazette 2016/24)**

(54) **PROCÉDÉ ET INSTALLATION DE COMBUSTION PAR OXYDO-RÉDUCTION EN BOUCLE CHIMIQUE D'UNE CHARGE HYDROCARBONÉE GAZEUSE AVEC REFORMAGE CATALYTIQUE IN SITU DE LA CHARGE**

VERFAHREN UND ANLAGE FÜR CHEMISCHE OXIDATION-REDUKTION VON KOHLENWASSERSTOFFGAS ALS AUSGANGSMATERIAL MIT IN SITU KATALYTISCHE REFORMIERUNG DES AUSGANGSMATERIALS

METHOD AND INSTALLATION FOR COMBUSTION VIA CHEMICAL LOOP OXIDATION-REDUCTION OF HYDROCARBON GAS FEED WITH AN IN SITU CATALYTIC REFORMING OF THE FEED

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.12.2014 FR 1462320**

(43) Date de publication de la demande:
**18.10.2017 Bulletin 2017/42**

(73) Titulaires:
• **IFP Energies nouvelles**
  **92500 Rueil-Malmaison (FR)**
• **TOTAL RAFFINAGE CHIMIE**
  **92400 Courbevoie (FR)**

(72) Inventeurs:
• **YAZDANPANAH, Mahdi**
  **76600 Le Havre (FR)**
• **PELLETANT, William**
  **69230 Saint-Genis-Laval (FR)**
• **SOZINHO, Tiago**
  **69320 Feyzin (FR)**
• **BERTHOLIN, Stephane**
  **69630 Chaponost (FR)**
• **STAINTON, Hélène**
  **Beaumont, TX 77713 (US)**
• **CLOUPET, Ann**
  **69420 Longes (FR)**
• **GUILLOU, Florent**
  **69360 Ternay (FR)**

(74) Mandataire: **IFP Energies nouvelles Département Propriété Industrielle Rond Point de l'échangeur de Solaize BP3 69360 Solaize (FR)**

(56) Documents cités:
EP-A2- 2 551 587          WO-A1-2009/136909
FR-A1- 3 001 400          US-A1- 2011 303 875
US-A1- 2012 214 106

**Description**

**Domaine de l'invention**

La présente invention concerne le domaine de la combustion d'hydrocarbures par oxydo-réduction en boucle chimique (CLC), et en particulier la combustion d'hydrocarbures gazeux tels que le méthane.

**Contexte général**

Procédé de Chemical Looping Combustion ou CLC : Dans la suite du texte, on entend par procédé CLC (Chemical Looping Combustion) un procédé d'oxydo-réduction en boucle sur masse active. Il convient de noter que, de manière générale, les termes oxydation et réduction sont utilisés en relation avec l'état respectivement oxydé ou réduit de la masse active. Le réacteur d'oxydation est celui dans lequel la masse oxydo-réductrice est oxydée et le réacteur de réduction est le réacteur dans lequel la masse oxydo-réductrice est réduite.

Dans un contexte de demande énergétique mondiale croissante, la capture du dioxyde de carbone ($CO_2$) en vue de sa séquestration constitue une voie incontournable pour limiter l'émission de gaz à effet de serre préjudiciable à l'environnement. Le procédé d'oxydo-réduction en boucle sur masse active, ou Chemical Looping Combustion (CLC) dans la terminologie anglo-saxonne, permet de produire de l'énergie à partir de combustibles hydrocarbonés tout en facilitant la capture du $CO_2$ émis lors de la combustion.

Le procédé CLC consiste à mettre en œuvre des réactions d'oxydo-réduction d'une masse active, typiquement un oxyde métallique, pour décomposer la réaction de combustion en deux réactions successives. Une première réaction d'oxydation de la masse active, avec de l'air ou un gaz jouant le rôle d'oxydant, permet d'oxyder la masse active. Cette réaction est généralement fortement exothermique et développe généralement plus d'énergie que la combustion de la charge. Une seconde réaction de réduction de la masse active ainsi oxydée à l'aide d'un gaz réducteur issu de la charge hydrocarbonée permet ensuite d'obtenir une masse active réutilisable ainsi qu'un mélange gazeux comprenant essentiellement du $CO_2$ et de l'eau, voire du gaz de synthèse contenant de l'hydrogène ($H_2$) et du monoxyde de carbone (CO). Cette réaction est généralement endothermique. Cette technique permet donc d'isoler le $CO_2$ ou le gaz de synthèse dans un mélange gazeux pratiquement dépourvu d'oxygène et d'azote.

Le bilan de la combustion en boucle chimique, i.e. des deux réactions précédentes, est globalement exothermique et correspond au pouvoir calorifique de la charge traitée. Il est possible de produire de l'énergie à partir de ce procédé, sous la forme de vapeur ou d'électricité, en disposant des surfaces d'échange dans la boucle de circulation de la masse active ou sur les effluents gazeux en aval des réactions de combustion ou d'oxydation.

Le brevet US 5 447 024 décrit par exemple un procédé de combustion en boucle chimique comprenant un premier réacteur de réduction d'une masse active à l'aide d'un gaz réducteur et un second réacteur d'oxydation permettant de restaurer la masse active dans son état oxydé par une réaction d'oxydation avec de l'air humide. La technologie du lit fluidisé circulant est utilisée pour permettre le passage continu de la masse active de son état oxydé à son état réduit.

La masse active, passant alternativement de sa forme oxydée à sa forme réduite et inversement, décrit un cycle d'oxydo-réduction.

Ainsi, dans le réacteur de réduction, la masse active $M_xO_y$ est tout d'abord réduite à l'état $M_xO_{y-2n-m/2}$, par l'intermédiaire d'un hydrocarbure $C_nH_m$, qui est corrélativement oxydé en $CO_2$ et $H_2O$, selon la réaction (1), ou éventuellement en mélange CO + $H_2$ selon les proportions utilisées.

$$C_nH_m + M_xO_y \rightarrow n\ CO_2 + m/2\ H_2O + M_xO_{y-2n-m/2} \qquad (1)$$

Dans le réacteur d'oxydation, la masse active est restaurée à son état oxydé $M_xO_y$ au contact de l'air selon la réaction (2), avant de retourner vers le premier réacteur.

$$M_xO_{y-2n-m/2} + (n+m/4)\ O_2 \rightarrow M_xO_y \qquad (2)$$

Dans les équations ci-dessus, M représente un métal.

L'efficacité du procédé de combustion en boucle chimique en lit fluidisé circulant repose dans une large mesure sur les propriétés physico-chimiques de la masse active d'oxydo-réduction.

La réactivité du ou des couples oxydo-réducteurs mis en jeu ainsi que la capacité de transfert d'oxygène associée sont des paramètres qui influent sur le dimensionnement des réacteurs et sur les vitesses de circulation des particules. La durée de vie des particules quant à elle dépend de la résistance mécanique des particules ainsi que de leur stabilité chimique.

Afin d'obtenir des particules utilisables pour ce procédé, les particules mises en jeu sont généralement composées d'un couple oxydo-réducteur choisi parmi CuO/Cu, $Cu_2O$/Cu, NiO/Ni, $Fe_2O_3$/$Fe_3O_4$, FeO/Fe, $Fe_3O_4$/FeO,

$MnO_2/Mn_2O_3$, $Mn_2O_3/Mn_3O_4$, $Mn_3O_4/MnO$, $MnO/Mn$, $Co_3O_4/CoO$, $CoO/Co$, ou une combinaison de plusieurs de ces couples oxydo-réducteurs, et parfois d'un liant apportant la stabilité physico-chimique nécessaire.

De manière générale, et en particulier dans le cas de la combustion d'une charge gazeuse de type gaz naturel, on vise généralement un niveau de conversion important des hydrocarbures, classiquement supérieur à 98%, tout en limitant le temps de séjour des réactifs dans les zones réactionnelles afin de conserver une taille des équipements réaliste. Ces contraintes imposent d'utiliser un couple oxydo-réducteur très réactif, ce qui réduit la sélection des matériaux envisageables.

Le couple NiO/Ni est souvent cité comme masse active de référence pour le procédé CLC pour ses capacités de transport d'oxygène et sa cinétique rapide de réduction, notamment en présence de méthane. Cependant un inconvénient majeur est que l'oxyde de nickel présente une toxicité importante, celui-ci étant classé comme substance CMR1 : Cancérigène, Mutagène ou toxique pour la Reproduction de classe 1, entrainant notamment des contraintes importantes sur le système de filtration des fumées. En outre, il présente un coût élevé. En effet, comme l'oxyde de nickel n'existe pas à l'état naturel de façon suffisamment concentrée pour pouvoir obtenir des propriétés intéressantes pour le procédé CLC, il est généralement utilisé de façon concentrée dans des particules de masse active synthétique dont le cout de fabrication est important.

Il faut noter qu'en plus du cout de fabrication, le coût de la masse active dans un procédé CLC doit prendre en compte le poste d'appoint en masse active qui peut devenir une part importante du coût opératoire, en raison d'une consommation continue de solide par attrition inévitable liée à la circulation du solide dans des réacteurs où les vitesses de gaz sont relativement élevées. Ainsi, le coût lié à la masse active sera particulièrement élevé pour des particules synthétiques, par opposition à des particules issues de certains minerais naturels qui peuvent être moins chers.

En effet, on connait par ailleurs l'utilisation de minerais naturels en tant que masse active pour le procédé CLC, tels que des minerais d'ilménite ou de manganèse, qui peuvent constituer une solution satisfaisante en termes de coût.

Cependant, l'utilisation de tels minerais est généralement moins bien adaptée à la combustion de charges gazeuses telles que le méthane qu'à la combustion de charges solides ou liquides, en termes de performance du procédé et du taux de conversion de la charge.

On connait également l'utilisation de mélanges d'oxydes métalliques naturels provenant de minerais avec de l'oxyde de nickel.

Ainsi, un mélange d'ilménite naturelle ($FeTiO_3$) et d'oxyde de nickel a été expérimenté par Rydén et al. pour la combustion de méthane dans un procédé CLC ("Ilmenite with addiction of NiO as oxygen carrier for chemical-looping combustion", Rydén M. et al., Fuel 2010, 89, pp 3523-3533). Le comportement de mélanges composés de 95% d'ilménite et 5 % d'oxyde de nickel imprégné sur différents supports, entre autres un support aluminique et un aluminate de magnésium, a été étudié. Ces différents mélanges solides ont été testés en laboratoire entre 900 et 950°C dans deux installations pilotes, l'une opérant en batch (un seul réacteur) et l'autre opérant en combustion continue (boucle de circulation de la masse active entre un réacteur air et un réacteur fuel). Il apparait que la présence d'oxyde de nickel améliore la conversion de la charge. Cependant des transformations importantes de la structure de l'ilménite se produisent, notamment une diminution de la densité et une augmentation de la porosité de l'oxyde métallique, pouvant affecter la durée de vie des particules. Des problèmes d'agglomération et de frittage des particules, entrainant des arrêts de l'installation CLC, ont également été constatés. Ces problèmes remettent sérieusement en question l'intérêt d'utiliser un tel mélange en tant que transporteur d'oxygène dans un procédé CLC.

L'utilisation d'un mélange d'hématite naturelle ($Fe_2O_3$) et d'oxyde de nickel a également été testée dans le cadre d'un procédé CLC par Chen et al. ("Experimental investigation of hematite oxygen carrier decorated with NiO for chemical-looping combustion of coal", Chen D. et al., Journal of Fuel Chemistry and Technology 2012, 40, 267-272). Le mélange circule entre un réacteur air et un réacteur fuel opérant tous deux en lit fluidisé. En outre, cette étude est d'une part limitée à la combustion du charbon, et il apparait d'autre part que la réactivité du mélange diffère selon les méthodes de préparation du mélange, avec l'apparition d'un blocage de la porosité dans certains cas. Selon cette étude, le mélange d'hématite naturelle et d'oxyde de nickel est obtenu soit par mélange mécanique, soit par une méthode d'imprégnation. Dans le cas de l'imprégnation réalisée d'une solution de nitrates de Nickel sur de l'hématite naturelle, le mélange montre une faible surface spécifique suggérant que l'effet sur les performances de réactions ne peut être significatif. Par ailleurs, l'imprégnation sur les particules d'hématite naturelle, montrant une teneur en hématite $Fe_2O_3$ de 80%, permet de former des particules d'oxyde de nickel sur les particules d'hématite, mais aboutit également à une réaction avec les éléments déjà présents pour former un phase stable, comme la spinelle $NiAl_2O_4$. Un autre effet indésirable de l'imprégnation réalisée est la dissolution d'une fraction du fer par la solution d'imprégnation (le rapport Fe/Si est modifié). Ces deux effets, l'apparition d'une phase stable et la dissolution de la phase transporteuse d'oxygène, ont pour conséquence la baisse de la concentration massique en sites actifs fournisseurs d'oxygène au système. Dans le cas d'un mélange mécanique d'hématite naturelle et d'oxyde de nickel, des problèmes de stabilité et de frittage en conditions réductrices, particulièrement liés à l'utilisation d'hématite naturelle, sont attendus. Dans tous les cas, le mélange étudié par Chen et al. pose des problèmes d'interaction chimique avec les matériaux réfractaires liés à la diffusion du fer aux températures mises en œuvre dans les procédés CLC.

Un autre exemple est décrit dans la demande de brevet WO 2014/068205 ou le brevet FR3001400 qui portent sur un procédé CLC dans lequel on utilise une masse active comprenant un minerai naturel de manganèse de type pyrolusite enrichi avec de l'oxyde de nickel, pour notamment améliorer les performances du procédé CLC en termes de taux de conversion des charges hydrocarbonées. Cependant, un inconvénient majeur d'un tel procédé est que l'oxyde de nickel fait partie de la masse active qui circule dans la boucle chimique et produit des fines par le phénomène d'attrition, à l'instar des procédés CLC présentés dans les études de Rydén et al. Ainsi que Chen et al mentionnées plus haut. La présence de particules de nickel dans les fines est indésirable du fait de la toxicité de l'oxyde de nickel, ce qui limite notamment la quantité d'oxyde de nickel pouvant être utilisée, et induit des contraintes importantes sur la filtration des effluents issus de la combustion.

Il existe ainsi un besoin de fournir un procédé CLC performant, notamment en terme de conversion de la charge, adapté au traitement d'une charge hydrocarbonée gazeuse, et qui peut mettre en œuvre un matériau en tant que masse active oxydo-réductrice peu coûteux, et répondant aux normes environnementales en termes de toxicité et d'émissions réductrices.

**Objectifs et résumé de l'invention**

Pour répondre à ce besoin, et surmonter au moins en partie les inconvénients de l'art antérieur cités, les demandeurs proposent de réaliser une étape de reformage catalytique de la charge gazeuse au sein de la zone de réduction où se déroule la combustion de la charge au contact du porteur d'oxygène. Le catalyseur de reformage est sous forme de particules fluidisées non transportées au sein de la zone de réduction, alors que le porteur d'oxygène est sous forme de particules fluidisées transportées de manière à circuler entre la zone de réduction et une zone d'oxydation où il est ré-oxydé. Le catalyseur de reformage est ainsi confiné dans la zone de réduction .

La combustion de la charge au sein de la zone de réduction permet de produire de la vapeur d'eau et du $CO_2$, qui entrent dans la réaction de reformage catalytique de la charge permettant de former du gaz de synthèse ($CO + H_2$), lui-même transformé en vapeur d'eau et $CO_2$ au contact du porteur d'oxygène.

La présente invention vise à atteindre un taux de conversion de la charge de l'ordre de 98 % ou plus. La mise en œuvre d'une telle zone de reformage in situ permet en effet de convertir une partie de la charge hydrocarbonée gazeuse en gaz de synthèse lors de sa combustion dans la zone de réduction, tout en utilisant la chaleur des réactions de la boucle CLC. La cinétique de réaction du gaz de synthèse avec le transporteur d'oxygène étant plus élevée que celle de la charge hydrocarbonée gazeuse avec le transporteur d'oxygène, les performances du procédé CLC sont améliorées, tout en limitant le temps de séjour de la charge au contact de porteur d'oxygène afin de limiter la taille des réacteurs utilisés.

Par ailleurs, l'absence de circulation du catalyseur de reformage hors de la zone de réduction, en particulier dans la boucle de circulation du porteur d'oxygène entre les zones de réduction et d'oxydation, diminue l'émission de fines par attrition. Ce type d'émission peut en effet être liée au passage des particules via les différents éléments de la circulation entre les deux réacteurs comme les cyclones, les risers, les coudes, ainsi qu'être liée aux chocs thermiques et chimiques liés aux réactions redox. Or, l'émission de ces fines peut engendrer, dans le cas de l'utilisation de matériaux CMR comme le nickel, des risques environnementaux et sur la santé. De plus, limiter ce type d'émission diminue le coût opérationnel lié aux appoints du catalyseur.

En outre, le gaz de synthèse ayant une bonne réactivité avec la plupart des matériaux transporteur d'oxygène, et en particulier avec des minerais peu coûteux, il est alors possible de minimiser les coûts liés à la masse active oxydo-réductrice tout en fournissant un procédé CLC performant en termes de conversion de la charge. En effet, malgré le fait que les minerais ne présentent généralement pas une activité catalytique suffisante pour induire un reformage in-situ de la charge hydrocarbonée, la présente invention permet toutefois, en associant un catalyseur de reformage au porteur d'oxygène au sein de la zone de réduction, d'assurer efficacement le reformage in-situ de la charge

Ainsi, la présente invention porte, selon un premier aspect, sur un procédé combustion d'une charge hydrocarbonée gazeuse par oxydo-réduction en boucle chimique, dans lequel :

- on effectue la combustion d'une charge hydrocarbonée gazeuse au sein d'une zone de réduction opérant en lit fluidisé par mise en contact avec une masse active oxydo-réductrice sous forme de particules ;
- on effectue un reformage catalytique de ladite charge au sein de ladite zone de réduction au contact d'un catalyseur de reformage distinct de la masse active oxydo-réductrice, ledit catalyseur étant sous forme de particules fluidisées non transportées au sein de ladite zone de réduction de manière à ce que le catalyseur de reformage ne quitte pas ladite zone de réduction, lesdites particules de catalyseur de reformage ayant une taille comprise entre 1 mm et 30 mm;
- on effectue la combustion du gaz de synthèse produit par la réaction de reformage catalytique au sein de ladite zone de réduction par mise en contact avec ladite masse active oxydo-réductrice
- on envoi dans une zone d'oxydation opérant en lit fluidisé les particules de masse active oxydo-réductrice ayant séjourné dans la zone de réduction pour oxyder lesdites particules de masse active oxydo-réductrice par mise en contact avec un flux de gaz oxydant.

De préférence, on choisit la taille des particules de catalyseur de manière à ce que lesdites particules aient une vitesse minimale de fluidisation $U_{mf}$ inférieure à une vitesse de gaz donnée $V_{sg}$ dans la zone de réduction et une vitesse terminale de chute $U_T$ supérieure à ladite vitesse de gaz $V_{sg}$.

Les particules de catalyseur ont de préférence une taille comprise entre 1,5 mm et 5 mm.

La vitesse de gaz $V_{sg}$ dans la zone de réduction peut être comprise entre 3 m/s et 15 m/s, de préférence entre 5 m/s et 10 m/s.

De préférence, le catalyseur de reformage comprend du nickel.

Avantageusement, le catalyseur de reformage comprend entre 6% et 25% poids de nickel, de préférence sur un support d'alumine.

Le nickel peut être initialement sous forme d'oxyde de nickel, et la fraction massique d'oxyde de nickel du catalyseur par rapport à la fraction massique de la masse active oxydo-réductrice comprise entre 0,1 % et 15 %, de préférence entre 1 % et 5%.

La masse active oxydo-réductrice est avantageusement composée d'oxydes métalliques provenant de minerais.

De préférence, les particules de la masse active oxydo-réductrice ont une granulométrie telle que plus de 90 % des particules ont une taille comprise entre 50 $\mu$m et 500 $\mu$m, de préférence comprise entre 100 $\mu$m et 300 $\mu$m.

De préférence, la charge hydrocarbonée gazeuse comprend essentiellement du méthane. Elle peut être du gaz naturel, du biogaz ou un gaz de raffinerie.

Selon un deuxième aspect, la présente invention porte sur une installation pour réaliser la combustion d'une charge hydrocarbonée gazeuse selon le procédé décrit, comportant :

- une zone de réduction comportant :
- des moyens d'injection de ladite charge hydrocarbonée gazeuse,
- une entrée pour un flux d'une masse active oxydo-réductrice sous forme de particules,
- une évacuation pour un mélange comprenant un flux gazeux et les particules de la masse active,
- un catalyseur de reformage sous forme de particules fluidisées non transportées, lesdites particules de catalyseur ayant une taille comprise entre 1 mm et 30 mm ;
- et configurée pour que ledit catalyseur de reformage ne quitte pas ladite zone de réduction par ladite évacuation ;
- une zone d'oxydation munie d'une alimentation en particules de masse active oxydo-réductrice ayant séjourné dans la zone de réduction, de moyens d'injection d'un gaz de fluidisation oxydant, et d'une évacuation d'un gaz oxydant appauvri en oxygène et des particules de masse active oxydo-réductrice oxydées.

De préférence, la zone de réduction est un réacteur comprenant :

- une partie basale de ré-accélération des particules de catalyseur en forme de tronc de cône inversé ;
- une partie intermédiaire sensiblement cylindrique surmontant ladite partie basale ;
- une partie sommitale cylindro-conique de désengagement des particules de catalyseur surmontant ladite partie intermédiaire.

D'autres objets et avantages de l'invention apparaîtront à la lecture de la description qui suit d'exemples de réalisations particuliers de l'invention, donnés à titre d'exemples non limitatifs, la description étant faite en référence aux figures annexées décrites ci-après.

**Brève description des figures**

La figure 1 est une représentation schématique de la mise en œuvre du procédé CLC selon l'invention, dans lequel on opère le reformage catalytique de la charge gazeuse au contact d'un catalyseur confiné dans la zone de réduction en même temps que la combustion de la charge au contact d'un porteur d'oxygène circulant.

La figure 2 est une coupe schématique simplifiée d'un exemple de réacteur de combustion mis en œuvre dans le procédé CLC selon l'invention.

Les figures 3 et 4 sont des diagrammes montrant la variation de la vitesse terminale de chute et de la vitesse minimum de fluidisation des particules de deux catalyseurs de reformage à base de nickel, en fonction du diamètre des particules.

Sur les figures, les mêmes références désignent des éléments identiques ou analogues.

**Description de l'invention**

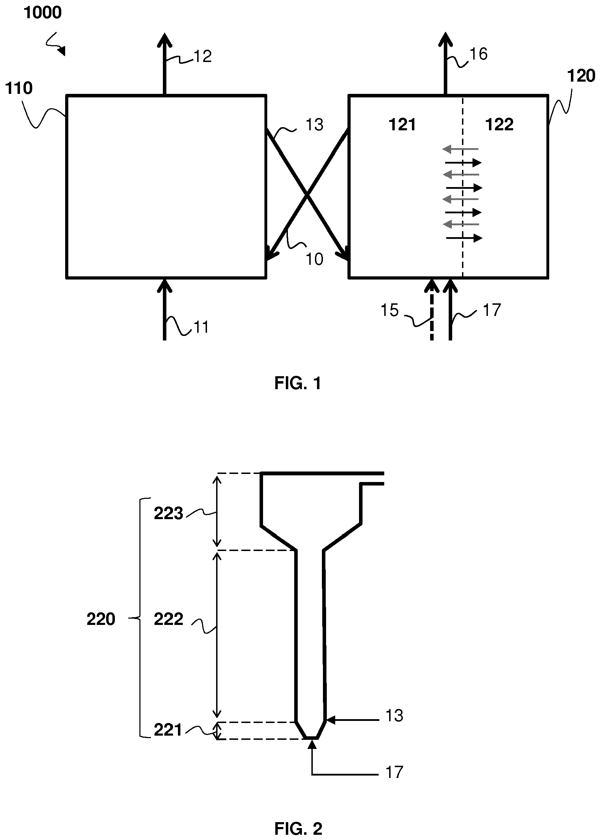

Il convient de noter, dans la présente description, qu'on entend par « reformage in situ » de la charge hydrocarbonée gazeuse, un reformage qui a lieu au sein de la zone de réduction. On rappelle qu'une zone de réduction doit être comprise ici, en relation avec la définition du procédé CLC déjà donnée plus haut, comme une zone réactionnelle dans laquelle la masse oxydo-réductrice est réduite, par mise en contact avec la charge hydrocarbonée gazeuse, aboutissant à la combustion de ladite charge. La réaction de reformage est détaillée plus bas, en relation avec la description de la figure 1.

Dans la présente description, les expressions « matériau transporteur d'oxygène », « porteur d'oxygène », « masse oxydo-réductrice » et « masse active oxydo-réductrice » sont équivalentes. La masse oxydo-réductrice est dite active en rapport avec ses capacités réactives, dans le sens où elle est apte à jouer son rôle de transporteur d'oxygène dans le procédé CLC en captant et relarguant de l'oxygène. L'expression abrégée « masse active » ou le terme « solide » pourront être également utilisés.

Dans le procédé CLC selon l'invention, les charges hydrocarbonées utilisées sont des charges hydrocarbonées gazeuses, de préférence composées essentiellement de méthane, par exemple du gaz naturel, un biogaz ou un gaz de raffinerie.

La présente invention propose de mettre en œuvre un catalyseur de reformage au sein de la zone de réduction où se déroule la combustion de la charge au contact du porteur d'oxygène, afin d'accélérer la conversion de la charge. Le catalyseur est sous forme de particules fluidisées, comme le porteur d'oxygène. Cependant les particules de catalyseur ne sont pas transportées, et sont ainsi confinées au sein de la zone de réduction, contrairement aux particules du porteur d'oxygène qui sont évacuées de la zone de réduction en même temps que les produits issus de la combustion, afin d'être renvoyées vers le réacteur d'oxydation.

La figure 1 est un schéma de principe simplifié de mise en œuvre du procédé CLC selon l'invention.

L'installation de combustion en boucle chimique 1000 comprend une zone d'oxydation 110, aussi appelé réacteur d'oxydation ou « réacteur air », dont la fonction est d'oxyder un porteur d'oxygène 10 sous formes de particules, en provenance d'une zone de réduction 120, aussi appelée réacteur de réduction ou « réacteur fuel », dont la fonction est de réaliser la réduction du porteur d'oxygène au contact d'un charge gazeuse pour libérer l'oxygène du porteur et effectuer la combustion de la charge. Les deux réacteurs opèrent en lit fluidisé, et le porteur d'oxygène circule entre les deux zones pour former la boucle de la combustion en boucle chimique. Les flèches entre les deux zones de réactions 110 et 120 représentent schématiquement les lignes de transport dans lesquelles circule le porteur d'oxygène (10, 13). Il est entendu que ces lignes de transport peuvent comporter divers dispositifs, parmi lesquels on peut citer, sans être exhaustif, des dispositifs de contrôle du flux de solide, tels que des vannes, des dispositifs de séparation gaz/solide, des dispositifs d'élutriation, des dispositifs d'échange de chaleur, ou des éléments d'étanchéité tels que des siphons.

Le porteur d'oxygène 10 provenant de la zone de réduction 120 est dans un état tout ou partiellement réduit, et réagit, au sein de la zone d'oxydation 110, au contact d'un flux de gaz oxydant 11, tel que de l'air, selon la réaction (2) décrite plus haut. Il en résulte un flux de gaz oxydant appauvri en oxygène 12, par exemple de l'air appauvri, et un flux de solide porteur d'oxygène à nouveau oxydé 13. La zone d'oxydation 110 opère en lit fluidisé, avec un écoulement ascendant co-courant des particules du porteur d'oxygène 10 et du gaz oxydant 11. Le flux de gaz oxydant appauvri en oxygène 12 et le flux de solide 13 sont généralement évacués au sommet de la zone d'oxydation par une même sortie, puis envoyés dans au moins un dispositif de séparation gaz/solide (non représenté) permettant de séparer le flux de gaz 12 du flux de solide 13 qui est à nouveau retourné vers la zone de réduction 120. La zone d'oxydation est ainsi munie d'une alimentation en porteur d'oxygène issu de la zone de réduction 120, de moyens d'injection du gaz oxydant 11 permettant la fluidisation des particules du porteur, tels qu'une couronne d'injection, aussi appelée couronne de distribution, ou tout autre moyen approprié (plaque perforée, plateau à calottes, buses d'injection, diffuseurs etc.), d'une évacuation d'un gaz oxydant appauvri en oxygène 12 et du porteur d'oxygène oxydé 13. La zone de réduction 110 est de préférence un réacteur sensiblement allongé et vertical communément appelé « riser » selon la terminologie anglo-saxonne. Le lit fluidisé de la zone d'oxydation a une température généralement comprise entre 700°C et 1100°C.

Le solide porteur d'oxygène 13 est acheminé vers la zone de réduction 120. La fonction de cette zone est de réaliser la combustion d'un combustible formé par une charge hydrocarbonée gazeuse 17, par la mise en contact de cette charge avec le porteur d'oxygène 13 qui libère, par réduction du porteur, l'oxygène jouant le rôle de comburant. La réaction globale est la réaction (1) résumée plus haut. Plus en détails, dans le cas de la conversion des charges hydrocarbonées gazeuses dans un procédé CLC, comme dans la présente invention, deux étapes peuvent être distinguées lors de la combustion de la charge au contact du porteur d'oxygène. Ces étapes peuvent se réaliser avec ou sans désorption du gaz de synthèse. Tout d'abord, la molécule d'hydrocarbure est transformée en un gaz de synthèse sur le porteur d'oxygène selon l'équation (3), puis le gaz de synthèse formé est oxydé sur le porteur d'oxygène en CO et $H_2$ selon les équations (4) et (5). Les réactions de conversion du gaz de synthèse selon les équations (4) et (5) présentent une cinétique très élevée en comparaison à la réaction de formation de ce gaz de synthèse selon l'équation (3).

$$C_nH_m + nM_xO_y \rightarrow nCO + \frac{m}{2}H_2 + nM_xO_{y-1} \qquad (3)$$

$$CO + M_xO_y \rightarrow CO_2 + M_xO_{y-1} \qquad (4)$$

$$H_2 + M_xO_y \rightarrow H_2O + M_xO_{y-1} \qquad (5)$$

La zone de réduction 120 opère en lit fluidisé, avec un écoulement ascendant co-courant des particules du porteur d'oxygène et de la charge 17. La fluidisation est assurée par la charge gazeuse 17.

La masse oxydo-réductrice peut être composée d'oxydes métalliques, tels que par exemple des oxydes de Fe, Ti, Ni, Cu, Mn, Co, V, seuls ou en mélange, pouvant provenir de minerais, tel que l'ilménite (FeTiO$_3$) ou un minerai naturel de manganèse, comme la pyrolusite (MnO$_2$), ou être synthétiques (par exemple des particules d'oxyde de fer supportées sur alumine Fe$_2$O$_3$/Al$_2$O$_3$), avec ou sans liant, et présente les propriétés d'oxydo-réduction requises et les caractéristiques nécessaires à la mise en œuvre de la fluidisation.

Avantageusement, la masse oxydo-réductrice provient de minerais, généralement moins couteux que les particules synthétiques. Selon l'invention, le reformage catalytique au sein de la zone de réduction, tel que décrit plus bas, permet en effet d'utiliser ce type de masse active étant donné que le gaz de synthèse issu du reformage présente une bonne réactivité avec la plupart des matériaux transporteur d'oxygène. Le minerai peut être préalablement broyé et tamisé afin d'obtenir une masse active de granulométrie compatible avec une mise en œuvre en lit fluidisé.

La capacité de stockage en oxygène de la masse oxydo-réductrice est avantageusement comprise, suivant le type de matériau, entre 1 % et 15 % poids. Avantageusement, la quantité d'oxygène effectivement transférée par l'oxyde métallique est comprise entre 1 et 3 % poids, ce qui permet de n'utiliser qu'une fraction de la capacité de transfert d'oxygène, idéalement moins de 30 % de celle-ci afin de limiter les risques de vieillissement mécanique ou d'agglomération des particules. L'utilisation d'une fraction seulement de la capacité de transport en oxygène a également pour avantage que le lit fluidisé joue un rôle de ballast thermique et lisse ainsi les variations de températures imposées par les réactions.

La masse active est sous la forme de particules fluidisables, appartenant aux groupes A ou B de la classification de Geldart. A titre d'exemple, et de manière non limitative, les particules de la masse active oxydo-réductrice peuvent appartenir au groupe B de la classification de Geldart, et présenter une granulométrie telle que plus de 90 % des particules ont une taille comprise entre 50 $\mu$m et 500 $\mu$m (diamètre moyen de Sauter), de préférence comprise entre 100 $\mu$m et 300 $\mu$m, pour une densité comprise entre 1 000 kg/m$^3$ et 6 000 kg/m$^3$ et préférentiellement entre 1 500 kg/m$^3$ et 5 000 kg/m$^3$.

La masse active oxydo-réductrice peut subir une phase d'activation de manière à augmenter ses capacités réactives, pouvant consister en une phase de montée en température, de préférence progressive, et de préférence sous atmosphère oxydante, par exemple sous air.

Selon l'invention, la zone de réduction comporte un catalyseur de reformage sous forme de particules fluidisées non transportées qui permet le reformage catalytique de la charge.

La zone de réduction 120 comprend ainsi des moyens d'injection de le charge hydrocarbonée gazeuse 17, tels qu'une couronne d'injection, aussi appelée couronne de distribution, ou tout autre moyen approprié (plaque perforée, plateau à calottes, buses d'injection, diffuseurs etc.), une entrée pour le flux de masse active oxydo-réductrice sous forme de particules, une évacuation pour le mélange comprenant le flux gazeux 16 et les particules de la masse active réduites 10, un catalyseur de reformage sous forme de particules fluidisées non transportées, et éventuellement des moyens d'injection de vapeur d'eau et/ou de CO$_2$ 15.

Le reformage de la charge hydrocarbonée peut être réalisé avec de la vapeur d'eau. La réaction de reformage catalytique à la vapeur, aussi appelée vaporéformage, est résumée par l'équation (6) ci-dessous. La vapeur d'eau est produite par la combustion de la charge au contact du porteur d'oxygène réduction E1. Le reformage catalytique de la charge peut également être réalisé avec du CO$_2$, selon l'équation (7) ci-dessous. On parle dans ce cas de reformage « sec » (« dry-reforming » en anglais). La vapeur d'eau est un agent plus efficace de reformage par rapport au CO$_2$ dans les conditions opératoires du procédé CLC.

$$C_nH_m + nH_2O \xleftarrow{Catalyseur} nCO + (n+\frac{m}{2})H_2 \qquad (6)$$

$$C_nH_m + nCO_2 \xleftarrow{\quad Catalyseur \quad} 2nCO + \frac{m}{2}H_2 \qquad (7)$$

La quantité de vapeur d'eau et de $CO_2$ produite lors de la combustion de la charge au contact du porteur d'oxygène est suffisante pour permettre le reformage de la charge dans la zone de réduction. Eventuellement, de la vapeur d'eau et/ou du $CO_2$ 15, de préférence de la vapeur d'eau, peut être injecté dans le réacteur de réduction pour compléter la vapeur d'eau et/ou le $CO_2$ produits par la combustion de la charge et intervenant dans les réactions de reformage de la charge.

La vapeur d'eau et le $CO_2$ présents dans la zone de réduction permettent également d'éviter le dépôt de coke à la surface des particules de catalyseur. La formation de coke se produit selon les deux voies principales suivantes. Une première voie correspond au craquage des hydrocarbures comme le méthane $CH_4$ selon la réaction (8) suivante :

$$CH_4 \rightarrow C + 2H_2 \qquad (8)$$

Une deuxième voie correspond à la réaction de Boudouard selon l'équation (9) suivante :

$$2\,CO \rightarrow C + CO_2 \qquad (9)$$

La présence d'eau et de $CO_2$ permet de limiter la formation de coke en gazéifiant les dépôts de carbone. Il est connu qu'un rapport d'$H_2O$ sur CO supérieur à 1 (rapport vapeur sur carbone S/C), tel que montré par Ishida et al. (Ishida M, Jin H, Okamoto T. "Kinetic Behavior of Solid Particle in Chemical-Looping Combustion: Suppressing Carbon Deposition in Reduction » Energy & Fuels 1998;12:223-9), conduit à une formation négligeable de coke.

Dans la zone de réduction 120, sont représentées deux sous zones 121 et 122 qui ne sont pas séparées entre elles. Dans ce schéma, la position des deux sous zones n'est pas représentative de la réalité, ces deux zones ayant été représentées uniquement à des fins d'illustration des deux types de réactions, i.e. combustion et reformage, se produisant dans la zone de réduction. La zone 121 représente la zone de la combustion où se déroulent les réactions de combustion au contact du porteur d'oxygène 13 sous forme de particules fluidisées transportées. La zone 122 correspond à la zone comportant le catalyseur de reformage sous forme de particules fluidisées non-transportées. Cette zone 122 peut être située sur toute la hauteur du lit fluidisé de la zone de réduction 120 ou sur une partie du lit entre des hauteurs fixes. La charge hydrocarbonée gazeuse injectée 17 dans le réacteur 120, tel que du gaz naturel, entre en contact avec le porteur d'oxygène 13. La combustion d'une partie de la charge produit du $CO_2$ et de l'$H_2O$. Ce flux de $CO_2$ et d'$H_2O$, ainsi qu'une partie de la charge injectée, entrent alors en contact avec le catalyseur de reformage, ce qui représenté par les flèches noires entre les zones 121 et 122. Le reformage partiel de la charge a lieu en présence du catalyseur, produisant du gaz de synthèse (CO et $H_2$), selon les équations réactionnelles (6) et (7) ci-dessus. Le gaz de synthèse produit, entrant en contact avec les particules de porteur d'oxygène, ce qui est figuré par les flèches grises de la zone 122 vers la zone 121, est alors converti en $CO_2$ et $H_2O$ (équations réactionnelles (4) et (5) ci-dessus).

Il résulte des réactions dans cette zone de réduction 120 un flux de fumées 16 comprenant quasi exclusivement du $CO_2$ et de l'$H_2O$ et un flux de solide porteur d'oxygène réduit 10 destiné à être acheminé vers la zone d'oxydation 110 pour y être à nouveau oxydé, bouclant ainsi la boucle de la combustion en boucle chimique. Les fumées 16 et le flux de solide 10 sont généralement évacués au sommet de la zone de réduction par une même sortie, puis envoyés dans un dispositif de séparation gaz/solide (non représenté) permettant de séparer les fumées 16 du flux de solide qui est à nouveau vers la zone d'oxydation 110. Le catalyseur de reformage est quant à lui confiné au sein de la zone de réduction. Ce confinement est assuré par l'état de suspension des particules de catalyseur : les particules ne sont pas transportées au sein du lit fluidisé de la zone de réduction, tel que cela est détaillé plus bas.

Le catalyseur de reformage est distinct de la masse active oxydo-réductrice. Le catalyseur diffère de la masse active oxydo-réductrice au moins de par son rôle et son état de suspension dans le lit fluidisé.

Le rôle du catalyseur de reformage est de catalyser la réaction de reformage de la charge pour la production de gaz de synthèse selon les équations (6) et (7), et non de fournir l'oxygène nécessaire à la combustion de la charge (équations (1), (3) à (5)) comme cela est le cas de la masse active oxydo-réductrice.

On utilisera tout type de catalyseur adapté au reformage de la charge hydrocarbonée gazeuse, généralement bien connu de l'homme du métier. Par exemple, et sans limitation aucune, on utilise un catalyseur à phase active à base de nickel, en particulier dans le cas où on souhaite réaliser le reformage d'une charge comprenant majoritairement du méthane au contact de vapeur d'eau, selon la réaction bien connue de vaporéformage du méthane (VMR), ou « Steam Methane Reforming » (SMR) en anglais. La réaction de vaporéformage du méthane est résumée par l'équation (10) suivante :

$$CH_4 + H_2O \leftrightarrow CO + 3H_2 \qquad (10)$$

Le catalyseur est sous forme de particules catalytiques monométalliques supportées sur différents oxydes métalliques, tel que, sans être limitatif, de l'alumine, de l'oxyde de calcium CaO, de l'oxyde de magnésium MgO, des oxydes mixtes comme $Al_2O_3$-CaO. De préférence, le catalyseur comprend du nickel. Avantageusement, les particules sont à base de nickel en tant que phase active, notamment dans le cas de la combustion d'une charge hydrocarbonée contenant essentiellement du méthane, et comprennent de préférence de 6% à 25% poids de nickel, par exemple sur un support comprenant majoritairement de l'alumine. Un tel catalyseur comprenant du nickel supporté sur de l'alumine est typiquement utilisé pour la production d'hydrogène, et est généralement utilisé avec de la vapeur d'eau en excès afin de limiter la formation de coke sur le catalyseur. Dans un tel cadre de production industrielle d'hydrogène, le rapport molaire entre la vapeur d'eau et le carbone contenu dans la charge (ratio S/C pour steam/carbon calculé sur des moles) est généralement compris entre 2,5 et 3,5, de préférence entre 2,5 et 3, afin de garantir la durée de vie du catalyseur.

Le nickel peut être sous forme d'oxyde de nickel. La fraction massique d'oxyde de nickel du catalyseur par rapport à la fraction massique de la masse active oxydo-réductrice est de préférence comprise entre 0,1 % et 15 %, de préférence entre 0,5 % et 15%, encore plus préférentiellement entre 1 % et 5 %. Ces gammes permettent d'obtenir une bonne conversion de la charge tout en minimisant la quantité de nickel pour minimiser les coûts.

Le catalyseur est sous forme de particules fluidisées non transportées dans la zone de réduction 120, c'est-à-dire que l'état de suspension des particules de catalyseur est tel que le catalyseur ne quitte pas le lit fluidisé de la zone de réduction avec les fumées 16, contrairement aux particules du porteur d'oxygène qui sont en lit fluidisé circulant et qui sortent de la zone de réduction avec les fumées 16.

Deux populations de particules distinctes, i.e. celle du porteur d'oxygène et celle du catalyseur, présentant des états de suspension différents coexistent au sein de la zone de réduction 120. Ces différents états de suspension sont essentiellement liés à la taille et/ou la densité de chaque population de particules.

Selon l'invention, on choisit la taille des particules de catalyseur de manière à ce que les particules aient une vitesse minimale de fluidisation $U_{mf}$ inférieure à une vitesse de gaz donnée $V_{sg}$ dans la zone de réduction 120, et une vitesse terminale de chute $U_T$ supérieure à la vitesse de gaz $V_{sg}$. Ce choix, effectué préalablement à la mise en œuvre de la combustion, prend en compte les valeurs de vitesse de gaz envisagées dans le réacteur de combustion et le design du réacteur.

Les particules de catalyseur ont une taille comprise entre 1 mm et 30 mm, de préférence comprise entre 1,5 mm et 5 mm (diamètre moyen de Sauter).

La granulométrie des particules peut être évaluée par de nombreuses techniques connues de l'homme du métier, telles que des méthodes macroscopiques comme la granulométrie laser, soit par voie humide soit par voie sèche, ou des méthodes microscopiques comme la microscopie optique.

A titre indicatif, la vitesse de gaz $V_{sg}$ dans la zone de réduction est comprise entre 3 m/s et 15 m/s, de préférence entre 5 m/s et 10 m/s.

Le confinement du catalyseur au sein de la zone de réduction permet notamment de limiter l'émission de fines de catalyseur par attrition liée à une circulation dans la boucle. Ces fines sont en effet indésirables, en particulier lorsque des matériaux CMR tel que le nickel sont employés, et constituent une perte de catalyseur qui peut être non négligeable et qui peut augmenter le coût opérationnel lié aux appoints du catalyseur de manière importante.

En outre, le confinement du catalyseur permet d'éviter que ce dernier soit envoyé dans la zone d'oxydation, et qu'ainsi il soit maintenu dans un état réduit propre à catalyser les réactions de reformage. Comparativement à une configuration où le catalyseur circule dans la boucle, l'invention permet donc de diminuer la quantité de catalyseur nécessaire, et donc les coûts associés.

Les réactions de reformage selon les équations (6), (7), et (10) sont généralement fortement endothermiques et nécessitent un apport d'énergie. Dans les procédés industriels classiques dédiés au reformage, on a généralement recours à deux modes d'apport d'énergie : soit l'introduction d'oxygène libre dans le milieu réactionnel pour effectuer une oxydation partielle de la charge dont l'exotherme compense l'endothermicité de la réaction de reformage, soit le recours à un chauffage externe.

Selon la présente invention, on utilise la chaleur produite par la boucle CLC pour fournir l'énergie nécessaire aux réactions de reformage. Le bilan des chaleurs des réactions ayant eu lieu dans les zones 110 et 120 est égal au pouvoir calorifique de la charge 17, de la même manière que si l'on en avait effectué la combustion dans un procédé de combustion classique. Selon l'invention, il est avantageusement fait usage d'une partie de cette capacité calorifique pour réaliser les réactions de reformage catalytique de la charge hydrocarbonée gazeuse dans la zone de réduction 120. En particulier, la chaleur nécessaire aux réactions dans la zone de réduction 120 est apportée par le porteur d'oxygène.

La température du lit fluidisé dans la zone de réduction 120 est typiquement comprise entre 700°C et 1100°C, par exemple de l'ordre de 950°C, ce qui est compatible avec les températures d'opération classique des réactions de reformage catalytique, comprises entre 650°C e 1000°C environ.

Le temps de contact dans la zone de réduction varie typiquement entre 1 seconde et 1 minute, de préférence entre 1 et 20 secondes. Le ratio entre la quantité de masse active en circulation et la quantité d'oxygène à transférer entre les deux zones réactionnelles est avantageusement compris entre 30 et 100, de préférence entre 40 et 70.

Le procédé CLC fonctionne typiquement à basse pression, par exemple allant de la pression atmosphérique à moins de 3 bar. Cette basse pression favorise les réactions de reformage, et permet par exemple de minimiser le coût énergétique de compression des gaz le cas échéant, par exemple de l'air utilisé dans le réacteur d'oxydation, et maximiser ainsi le rendement énergétique de l'installation.

Selon l'invention, le catalyseur est sous forme de particules fluidisées non transportées. On note qu'un catalyseur de reformage sous forme de particules contenues dans des internes, fixés par exemple aux parois du réacteur de combustion, tel que des paniers, pourrait être de la même manière confiné au sein du réacteur de combustion et assurer le reformage de la charge hydrocarbonée gazeuse.

La figure 2 est un schéma en coupe simplifié d'un exemple de réacteur de combustion mis en œuvre dans le procédé CLC, à titre d'illustration et non limitatif.

La zone de réduction est formée par le réacteur 220, qui comprend les trois parties suivantes :

- Une partie à la base du réacteur 221 permet la ré-accélération des particules de catalyseur. Cette partie 221 est en forme de tronc de cône inversé. Elle constitue le fond du réacteur qui reçoit la charge 17 et éventuellement le gaz de fluidisation supplémentaire. Le flux de particules du porteur d'oxygène 13 est en général envoyé dans le réacteur juste au-dessus de cette partie 221. Cette partie 221 du réacteur permet de renvoyer les particules de catalyseur dans la zone de combustion qui la surmonte, d'améliorer le mélange des particules, et de diminuer le risque de défluidisation et de l'agglomération des particules.
- Une partie intermédiaire 222 sensiblement cylindrique surmontant la partie basale 221, qui constitue la zone principale de combustion, et de reformage.
- Une partie sommitale 223 cylindro-conique de désengagement des particules de catalyseur surmontant la partie intermédiaire 222. Cette partie permet de diminuer un éventuel risque de sortie des particules de catalyseur hors du réacteur 220.

**Exemples**

Selon cet exemple, on réalise un reformage in-situ en utilisant un catalyseur sous forme de particules fluidisées dans le réacteur de réduction. La taille de ces particules de catalyseur est choisie pour avoir une vitesse minimale de fluidisation inférieure à la vitesse gaz dans le réacteur et une vitesse terminale de chute supérieure à la vitesse gaz dans le réacteur. Cela permet aux particules d'être fluidisées tout en évitant l'entrainement de ces particules hors du réacteur. Le choix de la taille des particules de catalyseur dépend de la vitesse gaz dans le réacteur fuel et du design de ce réacteur.

Différents types de particules peuvent être utilisées en tant que catalyseur de reformage. Cet exemple met en œuvre du nickel, qui est le métal actif majoritairement utilisé dans les catalyseurs de reformage industriels pour le SMR et la production d'hydrogène. Le catalyseur comporte du nickel imprégné sur un support d'alumine. D'autres catalyseurs tels que des particules nickel métallique pourraient également être adaptées pour réaliser le reformage in situ selon l'invention.

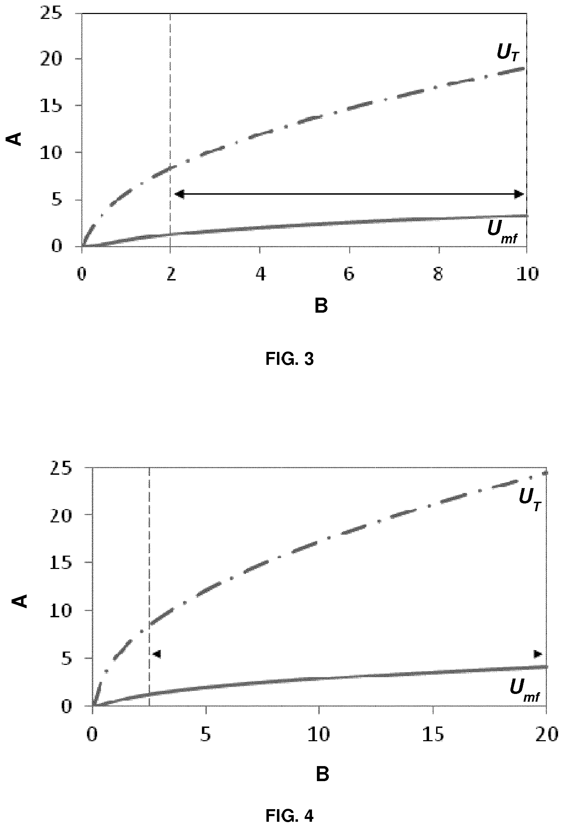

La Figure 3 est un diagramme montrant la variation de la vitesse minimum de fluidisation $U_{mf}$ (courbe en trait plein) et la vitesse terminale de chute $U_T$ (courbe en pointillés), des particules de nickel en tant que catalyseur de reformage (vitesse A en ordonnée indiquée en m/s), en fonction du diamètre (B) des particules de catalyseur (en mm). La taille des particules est représentée par le diamètre moyen de Sauter. Les calculs sont réalisés pour un catalyseur sous forme de particules $NiO/NiAl_2O_4$ (60/40), produit par Marion Technologies, d'une densité de 4750 kg/m$^3$.

Le diagramme montre que des particules de 2 mm à 10 mm peuvent être utilisées dans un réacteur fuel opérant dans le régime transporté (riser) avec par exemple une vitesse gaz $V_{sg}$ de 5 m/s à 8 m/s.

Des tests ont été réalisés en utilisant des catalyseurs comportant différentes fractions massiques de nickel par rapport au porteur d'oxygène. Les tests ont été réalisés en lit fluidisé bouillonnant à 890°C avec de la pyrolusite en tant que porteur d'oxygène. Le nickel sous la forme de particules de 150 $\mu$m de diamètre (diamètre moyen de Sauter) dans un mélange de $NiO/NiAl_2O_4$ (60 % / 40 % massique). Le porteur d'oxygène présente les caractéristiques suivantes : une masse volumique de 3250 kg/m$^3$, une capacité de transfert d'oxygène de 6,7 %, et un diamètre des particules de 208 $\mu$m.

Les résultats expérimentaux montrent que pour des fractions de 0%, 1%, et 5% de NiO dans un lit de pyrolusite, la conversion de carbone passe de 25%, à 76%, et à 88% dans un réacteur en batch à 890°C pour la combustion du $CH_4$.

Le diagramme de la figure 4 est du même type que celui de la figure 3, et représente les variations de la vitesse minimum de fluidisation $U_{mf}$ (courbe en trait plein) et de la vitesse terminale de chute $U_T$ (courbe en pointillés) (vitesse A en ordonnée indiquée en m/s), en fonction du diamètre (B), en mm, pour des particules d'un catalyseur de reformage du méthane commercial contenant 16,5 % poids d'oxyde de nickel (BASF SG-9301). La densité mesurée des particules est de 2680 kg/m³.

Le diagramme montre que dans ce cas des particules de 2,5 mm à 20 mm peuvent être utilisées dans le réacteur fuel.

**Revendications**

1. Procédé de combustion d'une charge hydrocarbonée gazeuse par oxydo-réduction en boucle chimique, dans lequel :

   - on effectue la combustion d'une charge hydrocarbonée gazeuse au sein d'une zone de réduction opérant en lit fluidisé par mise en contact avec une masse active oxydo-réductrice sous forme de particules ;
   - on effectue un reformage catalytique de ladite charge au sein de ladite zone de réduction au contact d'un catalyseur de reformage distinct de la masse active oxydo-réductrice, ledit catalyseur étant sous forme de particules fluidisées non transportées au sein de ladite zone de réduction de manière à ce que ledit catalyseur ne quitte pas ladite zone de réduction, lesdites particules de catalyseur de reformage ayant une taille comprise entre 1 mm et 30 mm ;
   - on effectue la combustion du gaz de synthèse produit par le reformage catalytique au sein de ladite zone de réduction par mise en contact avec ladite masse active oxydo-réductrice ;
   - on envoi dans une zone d'oxydation opérant en lit fluidisé les particules de masse active oxydo-réductrice ayant séjourné dans la zone de réduction pour oxyder lesdites particules de masse active oxydo-réductrice par mise en contact avec un flux de gaz oxydant.

2. Procédé selon la revendication 1, dans lequel on choisit la taille desdites particules de catalyseur de manière à ce que lesdites particules aient une vitesse minimale de fluidisation $U_{mf}$ inférieure à une vitesse de gaz donnée $V_{sg}$ dans la zone de réduction et une vitesse terminale de chute $U_T$ supérieure à ladite vitesse de gaz $V_{sg}$.

3. Procédé selon l'une des revendications précédentes, dans lequel les particules de catalyseur ont une taille comprise entre 1,5 mm et 5 mm.

4. Procédé selon l'une des revendications précédentes, dans lequel la vitesse de gaz $V_{sg}$ dans la zone de réduction est comprise entre 3 m/s et 15 m/s, de préférence entre 5 m/s et 10 m/s.

5. Procédé selon l'une des revendications précédentes, dans lequel le catalyseur de reformage comprend du nickel.

6. Procédé selon la revendication 5, dans lequel le catalyseur de reformage comprend entre 6% et 50% poids de nickel, de préférence sur un support d'alumine.

7. Procédé selon l'une des revendications 5 et 6, dans lequel le nickel est initialement sous forme d'oxyde de nickel, la fraction massique d'oxyde de nickel du catalyseur par rapport à la fraction massique de la masse active oxydo-réductrice étant comprise entre 0,1 % et 15 %, de préférence entre 1 % et 5%.

8. Procédé selon l'une des revendications précédentes, dans lequel la masse active oxydo-réductrice est composée d'oxydes métalliques provenant de minerais.

9. Procédé selon l'une des revendications précédentes, dans lequel les particules de la masse active oxydo-réductrice ont une granulométrie telle que plus de 90 % des particules ont une taille comprise entre 50 $\mu$m et 500 $\mu$m, de préférence comprise entre 100 $\mu$m et 300 $\mu$m.

10. Procédé selon l'une des revendications précédentes, dans lequel la charge hydrocarbonée gazeuse comprend essentiellement du méthane.

11. Procédé selon la revendication 10, dans lequel la charge hydrocarbonée gazeuse est du gaz naturel, du biogaz ou un gaz de raffinerie.

12. Installation pour réaliser la combustion d'une charge hydrocarbonée gazeuse selon l'une des revendications 1 à 11, comprenant :

   - une zone de réduction (120, 220) comportant :

- des moyens d'injection de ladite charge hydrocarbonée gazeuse (17),
- une entrée pour un flux d'une masse active oxydo-réductrice sous forme de particules (13),
- une évacuation pour un mélange comprenant un flux gazeux (16) et les particules de la masse active,
- un catalyseur de reformage sous forme de particules fluidisées non transportées, lesdites particules de catalyseur ayant une taille comprise entre 1 mm et 30 mm,
- et configurée pour que ledit catalyseur de reformage ne quitte pas ladite zone de réduction (120) par ladite évacuation ;
- une zone d'oxydation (110) munie d'une alimentation en particules de masse active oxydo-réductrice ayant séjourné dans la zone de réduction, de moyens d'injection d'un gaz de fluidisation oxydant (10), et d'une évacuation d'un gaz oxydant appauvri en oxygène et des particules de masse active oxydo-réductrice oxydées.

**13.** Installation selon la revendication 12, dans laquelle la zone de réduction (220) est un réacteur comprenant :

- une partie basale de ré-accélération des particules de catalyseur en forme de tronc de cône inversé (221) ;
- une partie intermédiaire sensiblement cylindrique (222) surmontant ladite partie basale (221) ;
- une partie sommitale cylindro-conique de désengagement des particules de catalyseur (223) surmontant ladite partie intermédiaire (222).

**Patentansprüche**

**1.** Verfahren zur Verbrennung einer gasförmigen Kohlenwasserstoffcharge durch einen Redoxvorgang in einem chemischen Schleifenreaktor, wobei:

- die gasförmige Kohlenwasserstoffcharge in einem Reduktionsbereich verbrannt wird, der als Fließbett betrieben wird, indem sie mit einer partikelförmigen Redox-Wirkmasse in Kontakt gebracht wird;
- die Charge in dem Reduktionsbereich einer katalytischen Reformierung unterzogen wird, die beim Kontakt mit einem Reformierungskatalysator erfolgt, der sich von der Redox-Wirkmasse unterscheidet, wobei der Katalysator in Form von fluidisierten Partikeln vorliegt, die innerhalb des Reduktionsbereichs nicht befördert werden, sodass der Katalysator den Reduktionsbereich nicht verlässt, wobei die Reformierungskatalysatorpartikel eine Größe in der Spannbreite von 1 mm bis 30 mm haben;
- das Synthesegas verbrannt wird, welches durch die katalytische Reformierung im Reduktionsbereich erzeugt wurde, indem ein Kontakt mit der Redox-Wirkmasse hergestellt wird;
- die Partikel der Redox-Wirkmasse, welche in dem Reduktionsbereich verweilt haben, einem Oxidationsbereich zugeführt werden, der als Fließbett betrieben wird, um die Partikel der Redox-Wirkmasse zu oxidieren, indem sie mit einem oxidierenden Gasstrom in Kontakt gebracht werden.

**2.** Verfahren nach Anspruch 1, wobei die Größe der Katalysatorpartikel derart gewählt wird, dass die Partikel einen Mindestwert der Fluidisierungsgeschwindigkeit $U_{mf}$, der geringer als eine gegebene Gasgeschwindigkeit $V_{sg}$ im Reduktionsbereich ist, und einen Endwert der Sinkgeschwindigkeit $U_T$ haben, der höher als diese Gasgeschwindigkeit $V_{sg}$ ist.

**3.** Verfahren nach einem beliebigen der vorhergehenden Ansprüche, wobei die Katalysatorpartikel eine Größe in der Spannbreite von 1,5 mm bis 5 mm haben.

**4.** Verfahren nach einem der vorhergehenden Ansprüche, wobei die Gasgeschwindigkeit $V_{sg}$ im Reduktionsbereich in der Spannbreite von 3 m/s bis 15 m/s, vorzugsweise von 5 m/s bis 10 m/s liegt.

**5.** Verfahren nach einem der vorhergehenden Ansprüche, wobei der Reformierungskatalysator Nickel umfasst.

**6.** Verfahren nach Anspruch 5, wobei der Reformierungskatalysator zwischen 6 % und 50 % nach Gewicht als Nickel umfasst, vorzugsweise auf einem Aluminiumoxidträger.

**7.** Verfahren nach einem der Ansprüche 5 und 6, wobei das Nickel ursprünglich in Form von Nickeloxid vorliegt, wobei der Massenanteil an Nickeloxid des Katalysators in der Spannbreite von 0,1 % bis 15 %, vorzugsweise von 1 % bis 5 % liegt, bezogen auf den Massenanteil der Redox-Wirkmasse.

**8.** Verfahren nach einem der vorhergehenden Ansprüche, wobei sich die Redox-Wirkmasse aus Metalloxiden zusammensetzt, welche aus Erzen stammen.

9. Verfahren nach einem der vorhergehenden Ansprüche, wobei die Partikel der Redox-Wirkmasse eine Korngrößenverteilung haben, die derart ist, dass mehr als 90 % der Partikel eine Größe in der Spannbreite von 50 $\mu$m bis 500 $\mu$m, vorzugsweise in der Spannbreite von 100 $\mu$m und 300 $\mu$m haben.

10. Verfahren nach einem der vorhergehenden Ansprüche, wobei die gasförmige Kohlenwasserstoffcharge im Wesentlichen Methan umfasst.

11. Verfahren nach Anspruch 10, wobei es sich bei der gasförmigen Kohlenwasserstoffcharge um Erdgas, Biogas oder ein Raffineriegas handelt.

12. Anlage zur Durchführung der Verbrennung einer gasförmigen Kohlenwasserstoffcharge nach einem der Ansprüche 1 bis 11, wobei sie Folgendes umfasst:

- einen Reduktionsbereich (120, 220), der Folgendes umfasst:
- Mittel zum Einleiten der gasförmigen Kohlenwasserstoffcharge (17),
- eine Eintrittsöffnung für einen Stoffstrom einer partikelförmigen Redox-Wirkmasse (13),
- eine Auslassöffnung für eine Mischung, die einen gasförmigen Stoffstrom (16) und die Partikel der Wirkmasse umfasst,
- einen Reformierungskatalysator in Form fluidisierter nicht beförderter Partikel, wobei Katalysatorpartikel eine Größe in der Spannbreite von 1 mm bis 30 mm haben,
- wobei sie weiterhin derart ausgelegt ist, dass der Reformierungskatalysator den Reduktionsbereich (120) nicht durch die Auslassöffnung verlässt;
- einen Oxidationsbereich (110), der mit einer Zuführung für Redox-Wirkmassepartikel, welche im Reduktionsbereich verweilt haben, mit Mitteln zum Einleiten eines oxidierenden Fluidisierungsgases (10) und mit einer Auslassöffnung für ein an Sauerstoff abgereichertes oxidierendes Gas und für oxidierte Redox-Wirkmassepartikel versehen ist.

13. Anlage nach Anspruch 12, wobei es sich bei dem Reduktionsbereich (220) um einen Reaktor handelt, der Folgendes umfasst:

- einen Basisabschnitt zur Wiederbeschleunigung der Katalysatorpartikel, in Form eines umgekehrten Kegelstumpfes (221);
- einen im Wesentlichen zylindrischen Zwischenabschnitt (222), welcher sich oberhalb des Grundabschnitts (221) befindet;
- einen zylindrisch-konischen Spitzenabschnitt (223), der als Rückzugsraum für die Katalysatorpartikel dient und sich oberhalb des Zwischenabschnitts (222) befindet.

## Claims

1. Process for the redox chemical looping combustion of a gaseous hydrocarbon-based feedstock, in which:

- a gaseous hydrocarbon-based feedstock is combusted in a reduction zone operating as a fluidized bed by placing it in contact with a redox-active mass in the form of particles;
- catalytic reforming of said feedstock is performed in said reduction zone on contact with a reforming catalyst different from the redox-active mass, said catalyst being in the form of fluidized particles not transported into said reduction zone such that said catalyst does not leave said reduction zone, said reforming catalyst particles having a size of between 1 mm and 30 mm;
- the synthesis gas produced by the catalytic reforming in said reduction zone is combusted by placing it in contact with said redox-active mass;
- the particles of redox-active mass which have resided in the reduction zone are sent into an oxidation zone operating as a fluidized bed to oxidize said particles of redox-active mass by placing them in contact with a stream of oxidizing gas.

2. Process according to Claim 1, in which the size of said catalyst particles is chosen so that said particles have a minimum fluidization speed $U_{mf}$ less than a given gas speed $V_{sg}$ in the reduction zone and a terminal drop speed

$U_T$ higher than said gas speed $V_{sg}$.

3.   Process according to either of the preceding claims, in which the catalyst particles have a size of between 1.5 mm and 5 mm.

4.   Process according to one of the preceding claims, in which the gas speed $V_{sg}$ in the reduction zone is between 3 m/s and 15 m/s, preferably between 5 m/s and 10 m/s.

5.   Process according to one of the preceding claims, in which the reforming catalyst comprises nickel.

6.   Process according to Claim 5, in which the reforming catalyst comprises between 6% and 50% by weight of nickel, preferably on an alumina support.

7.   Process according to either of Claims 5 and 6, in which the nickel is initially in the form of nickel oxide, the mass fraction of nickel oxide in the catalyst relative to the mass fraction of the redox-active mass being between 0.1% and 15%, preferably between 1% and 5%.

8.   Process according to one of the preceding claims, in which the redox-active mass is composed of metal oxides originating from ores.

9.   Process according to one of the preceding claims, in which the particles of the redox-active mass have a particle size such that more than 90% of the particles have a size of between 50 $\mu$m and 500 $\mu$m, preferably between 100 $\mu$m and 300 $\mu$m.

10.   Process according to one of the preceding claims, in which the gaseous hydrocarbon-based feedstock essentially comprises methane.

11.   Process according to Claim 10, in which the gaseous hydrocarbon-based feedstock is natural gas, biogas or a refinery gas.

12.   Facility for combusting a gaseous hydrocarbon-based feedstock according to one of Claims 1 to 11, comprising:

- a reduction zone (120, 220) including:
- means for injecting said gaseous hydrocarbon-based feedstock (17),
- an inlet for a stream of a redox-active mass in the form of particles (13),
- an evacuation for a mixture comprising a gas stream (16) and the active mass particles,
- a reforming catalyst in the form of non-transported fluidized particles, said catalyst particles having a size of between 1 mm and 30 mm,
- and configured so that said reforming catalyst does not leave said reduction zone (120) via said evacuation;
- an oxidation zone (110) equipped with a feed of particles of redox-active mass which have resided in the reduction zone, means for injecting an oxidizing fluidization gas (10), and an evacuation for an oxygen-depleted oxidizing gas and oxidized particles of redox-active mass.

13.   Facility according to Claim 12, in which the reduction zone (220) is a reactor comprising:

- a bottom part for re-accelerating the catalyst particles, in inverted frustoconical form (221);
- a substantially cylindrical intermediate part (222) mounted on said bottom part (221);
- a cylindroconical top part for disengaging the catalyst particles (223), mounted on said intermediate part (222).

**1000**

**110**

**120**

12

16

13

**121**  **122**

10

11

15  17

**FIG. 1**

223

220

222

221

13

17

**FIG. 2**

FIG. 3

FIG. 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5447024 A
- WO 2014068205 A
- FR 3001400

**Littérature non-brevet citée dans la description**

- **RYDÉN M. et al.** Ilmenite with addiction of NiO as oxygen carrier for chemical-looping combustion. *Fuel,* 2010, vol. 89, 3523-3533
- **CHEN D. et al.** Experimental investigation of hematite oxygen carrier decorated with NiO for chemical-looping combustion of coal. *Journal of Fuel Chemistry and Technology,* 2012, vol. 40, 267-272
- **ISHIDA M ; JIN H ; OKAMOTO T.** Kinetic Behavior of Solid Particle in Chemical-Looping Combustion: Suppressing Carbon Deposition in Reduction. *Energy & Fuels,* 1998, vol. 12, 223-9